# EUROPÄISCHE PATENTSCHRIFT

(11) **EP 0 995 916 B1**
(45) Veröffentlichungstag und Bekanntmachung des Hinweises auf die Patenterteilung: **28.07.2004**
(21) Anmeldenummer: 99119547.0
(22) Anmeldetag: 01.10.1999
(51) Int. Cl.: F16C 33/58, F16C 13/00

(54) **Wälzlager**
Rolling bearing
Roulement

(30) Priorität: 22.10.1998 DE 19848705
(43) Veröffentlichungstag der Anmeldung: 26.04.2000
(73) Patentinhaber: INA-Schaeffler KG, 91074 Herzogenaurach (DE)
(72) Erfinder: Herber, Georg, 91074 Herzogenaurach (DE); Bode, Helmut, 91074 Herzogenaurach (DE); Schäfers, Heinz, 91056 Erlangen (DE); Weber, Jörg, 91301 Forchheim (DE)

(56) Entgegenhaltungen:
- EP-A- 0 568 852
- US-A- 4 863 293
- US-A- 5 425 585
- PATENT ABSTRACTS OF JAPAN vol. 1996, no. 03, 29. März 1996 (1996-03-29) & JP 07 305755 A (NTN CORP), 21. November 1995 (1995-11-21)

## Beschreibung

### Gebiet der Erfindung

Die Erfindung betrifft ein Wälzlager mit als Rollen oder Kugeln ausgebildeten, zwischen einer Innenlaufbahn und einer Außenlaufbahn angeordneten Wälzkörpern und mit einem dickwandigen Außennng, dessen innere Oberflache die Außenlaufbahn bildet und dessen äußere Oberfläche für das direkte Abrollen auf einer zylindrischen oder ebenen Gegenlaufbahn vorgesehen ist und eine ballige (im Längsschnitt bogenförmige) Kontur aufweist, wie z.B. aus JP-A-07 305 755 bekannt ist.

### Hintergrund der Erfindung

Derartige Wälzlager sind als Lauf-, Stutz- und Kurvenrollen bekannt, die mit ihren dickwandigen Außenringen die Übertragung von hohen radialen Belastungen auf ihre Gegenlaufbahnen, zumeist Kurvenscheiben oder gerade Fuhrungsbahnen, erlauben. Die Mantelflächen der Außennnge sind ballig profiliert, um zusätzliche Kantenbelastungen aus Fluchtungsfehlern zu vermeiden Eine solche Profilierung wird meistens von einem konstanten Radius bestimmt. Parallel zu diesen balligen Ausführungen werden auch Lösungen mit zylindrischem Außenprofil angeboten, die allerdings schon bei genngen Winkelfehlern hohe Kantenspannungen erreichen Aufgrund der hohen radialen Belastung ist es bei Außenringen mit balligem Profil vorteilhaft, einen möglichst großen Radius zu haben, um die maximale Hertzsche Pressung zu senken

Aus der Offenlegungsschrift DE 42 00 381 A1 ist ein Wälzlager bekannt, bei welchem nicht ein Außenring, sondern die als Wälzkörper verwendeten Rollen vorzugsweise tonnenförmig ausgebildet sind. In den Endbereichen wird die Kontur jeder Rolle von einem Krümmungsradius r, bestimmt und geht dann an einem festen Punkt in eine zylindrische Form über. Die Rolle ist hier jeweils als hohle Rolle ausgeführt, während die Laufbahnen des Lagers, an denen sich die Rollen abwälzen, Zylinderflächen eines inneren und eines äußeren Lagerringes sind.

Die Patentschrift DE 29 35 023 C2 zeigt ein Rollenlager, bei welchem mindestens einige der Rollen mit einer Mantelfläche versehen sind, die im Axialschnitt mindestens drei ohne scharfe oder abgerundete Kanten längs des gesamten Rollenprofils ineinander übergehende Abschnitte mit unterschiedlichen Krümmungsradien aufweist. Dabei haben die Abschnitte zu beiden Seiten des Mittelabschnittes einer Rolle Krümmungsradien, die kleiner sind als der Krümmungsradius im Mittelabschnitt selbst. Die Lagerlaufbahnen dieses vorbekannten Lagers sind aber nicht zylindrisch, sondern ebenfalls gekrümmt ausgeführt.

Ein dickwandiger Außenring, der für das Abrollen auf einer zylindrischen Gegenlaufbahn vorgesehen wäre, ist diesen beiden Vorveröffentlichungen nicht zu entnehmen.

### Zusammenfassung der Erfindung

Der Erfindung liegt die Aufgabe zugrunde, bei einem Wälzlager mit einem dickwandigen Außenring die ballige Kontur des Außenringes so zu gestalten, daß beim Abrollen des Außenringes auf der zylindrischen Gegenlaufbahn die maximal auftretende Hertzsche Pressung verringert ist und ihr Grenzwert auch beim Verkippen der Außenringachse nicht überschritten wird.

Diese Aufgabe wird erfindungsgemäß dadurch gelöst, daß die ballige Kontur des Außenringes aus mehreren Kreisbogen so zusammengesetzt ist, daß diese ohne Kante ineinander übergehen, wobei der längere Krümmungsradius eines mittleren Kreisbogens und der kürzere Krümmungsradius eines äußeren Kreisbogens zueinander in einem Verhältnis von 2 zu 1 bis 5 zu 1 stehen. Aufgrund einer solchen balligen Kontur wird der Maximalwert der auftretenden Hertzschen Pressung, der sich bei paralleler Anordnung der Außenringachse in bezug auf die Gegenlaufbahn einstellt, dann nicht überschritten, wenn im Abrollbetrieb des Außenringes dessen Längsachse sich gegenüber der Gegenlaufbahn neigt, wenn also eine Verkippung des Außenringes an der Gegenlaufbahn auftritt.

Die ballige Kontur des Außenringes kann aus drei Kreisbögen zusammengesetzt sein, wobei der langere Krümmungsradius eines mittleren Kreisbogens und der kürze Krümmungsradius eines äußeren Kreisbogens, der dem mittleren Kreisbogen jeweils benachbart ist, zueinander in dem Verhältnis von 2 zu 1 bis 5 zu 1 stehen. Es ist auch möglich, die ballige Kontur des Außenringes aus fünf Kreisbögen zusammenzusetzen, wobei die Betrage der Krümmungsradien der Kreisbögen jeweils von der Mitte des Außenringes aus axial nach außen abnehmen Schließlich kann die ballige Kontur des Außenringes auch aus einer Vielzahl von Kreisbögen zusammengesetzt sein, wobei die Beträge der Krümmungsradien der Kreisbögen von einem größten Wert in der Mitte des Außenringes axial zu den Enden hin monoton abnehmen.

Bei einem solchen Wälzlager können die Länge des Krümmungsradius eines mittleren Kreisbogens und die Breite des Außenringes zueinander in einem Verhältnis von 3 zu 1 bis 6 zu 1 stehen. Es kann als Stützrolle ausgebildet sein, wobei die Innenlaufbahn die äußere Oberfläche eines Innenringes ist Es ist aber auch möglich, daß das Wälzlager als Kurvenrolle ausgebildet ist, wobei die lnnenlaufbahn die äußere Oberfläche eines Bolzens an dessen einem Ende ist und dessen anderes Ende ein Befestigungsgewinde aufweist.

### Kurze Beschreibung der Zeichnung

Ausführungsbeispiele der Erfindung sind in der Zeichnung dargestellt und werden im folgenden näher beschrieben. Es zeigen:
- Figur1: ein als Kurvenrolle ausgebildetes erfindungsgemaßes Wälzlager, teilweise im Längsschnitt;
- Figur 2: die sich auf einer zylindrischen Gegenlaufbahn abwälzende Kurvenrolle in der Ansicht, mit zur Gegenlaufbahn paralleler Längsachse;
- Figur 3: die Kurvenrolle gemäß Figur 2 mit zu Gegenlaufbahn geneigter (verkippter) Längsachse;
- Figur 4: einen Längsschnitt durch einen Außenring einer Kurvenrolle mit einer aus drei Kreisbögen zusammengesetzten Kontur;
- Figur 5: einen Figur 4 entsprechenden Außenring mit der Darstellung der Bereiche der drei Kreisbögen;
- Figur 6: einen gegenüber Figur 5 abgewandelten Außenring mit der Darstellung der Bereiche von fünf Kreisbogen, aus welchen die Kontur des Außenringes zusammengesetzt ist.

### Ausführliche Beschreibung der Zeichnung

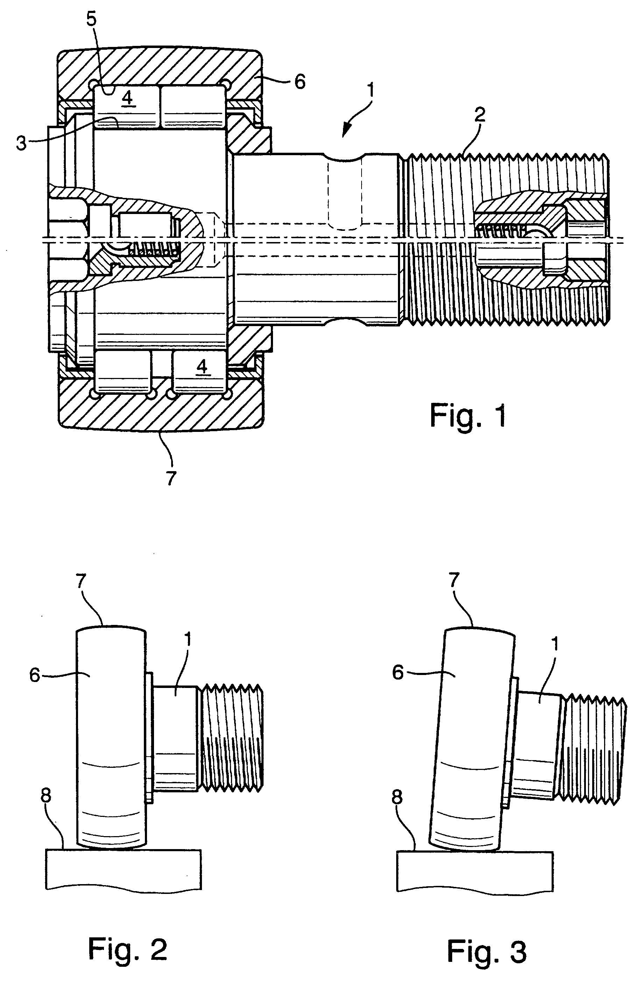

Ein in Figur 1 dargestelltes erfindungsgemäßes Wälzlager ist als Kurvenrolle ausgebildet und enthält einen Bolzen 1, an dessen einem Ende ein Befestigungsgewinde 2 ausgebildet ist. Das andere Ende des Bolzens 1 bildet eine kreiszylindrische Innenlaufbahn 3 für zylindrische Rollen 4 als Wälzkörper des Wälzlagers. Statt der Rollen 4 ist auch die Verwendung von Kugeln möglich. Eine Außenlaufbahn 5 wird von der inneren Oberfläche eines dickwandigen Außenringes 6 gebildet, der den Bolzen 1 an seinem die Innenlaufbahn enthaltenden Ende und die Rollen 4 umgibt. In Figur 1 sind zwei unterschiedliche Möglichkeiten der Ausbildung und Anordnung der Rollen 4 dargestellt. In der oberen Hälfte grenzen die längeren Rollen 4 unmittelbar aneinander an, während in der unteren Halfte die kürzeren Rollen 4 in einem axialen Abstand zueinander angeordnet sind. Es ist also sowohl eine Kurvenrolle mit längeren Rollen 4 als auch eine Kurvenrolle mit kürzeren Rollen 4 oder mit Kugeln denkbar.

Erfindungsgemäß weist der Außenring eine Mantelfläche auf, die im Querschnitt als ballige Kontur erscheint, welche aus mehreren Kreisbögen zusammengesetzt ist. Dabei gehen zwei benachbarte Kreisbogen ohne Kante ineinander über, haben also an ihren benachbarten Enden eine gemeinsame Tangente. Im Ausführungsbeispiel nach den Figuren 1 bis 5 wird an dem Außenring 6 die ballige Kontur 7 von einem mittleren Kreisbogen mit einem längeren Krümmungsradius K₁ und zwei benachbarten Kreisbogen mit jeweils einem kürzeren Krümmungsradius K₂ gebildet. Der Krümmungsradius K₁ steht mit jedem Krümmungsradius K₂ in einem Verhaltnis von 2 zu 1 bis 5 zu 1 Die Länge des Krümmungsradius K₁ und die Breite B des Außenringes 6 können zueinander in einem Verhältnis von 3 zu 1 bis 6 zu 1 stehen.

In den Figuren 2 und 3 sind zwei unterschiedliche Stellungen des Außennnges 6 des Bolzens 1 in bezug auf eine Gegenlaufbahn 8 dargestellt, an welcher sich der Außenring 6 mit seiner balligen Kontur 7 abwälzt. Die Gegenlaufbahn 8 kann eine zylindrische oder ebene Oberfläche sein. In Figur 2 verläuft die Drehachse des Außenringes 6 parallel zu der Gegenlaufbahn 8, wahrend diese Achse in Figur 3 gegenüber der Gegenlaufbahn 8 geneigt angeordnet ist. Der Außenring 6 ist hier also an der Gegenlaufbahn 8 verkippt angeordnet.

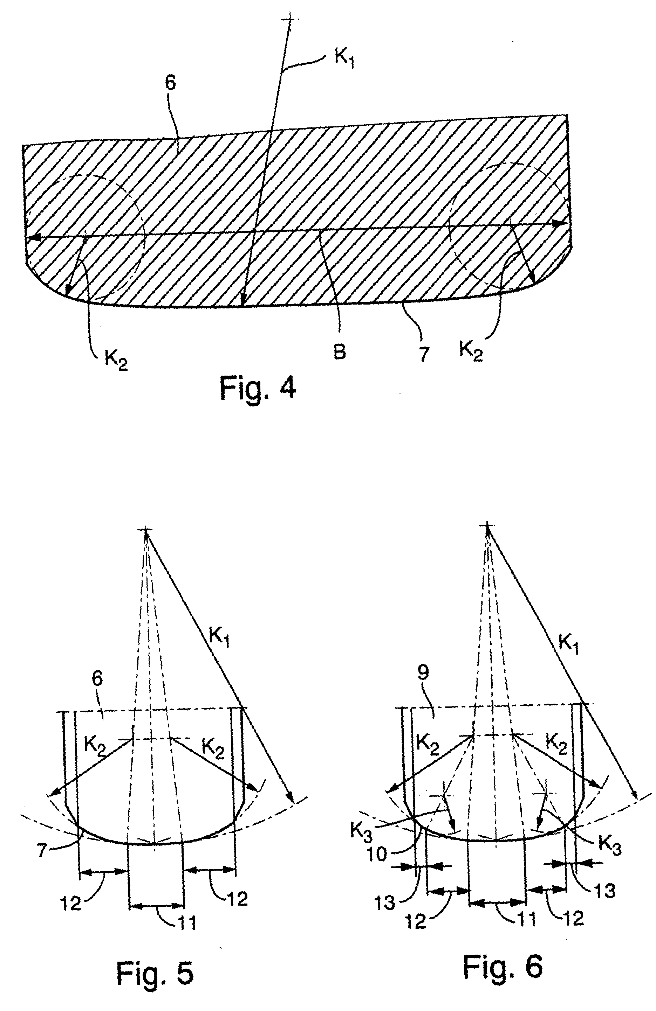

Der Außenring 9 gemäß Figur 6 hat eine ballige Kontur 10, die aus insgesamt fünf Kreisbogen zusammengesetzt ist. Jeweils von der Mitte des Außenringes 9 aus zu einem Ende hin folgen in axialer Richtung auf einen Kreisbogen mit dem größten Krümmungsradius K₁ ein Kreisbogen mit einem kleineren Krümmungsradius K₂ und auf diesen ein Kreisbogen mit einem noch kleineren Krümmungsradius K₃. Die Betrage der Krümmungsradien K₁, K₂ und K₃ nehmen also von einem größten Wert in der Mitte zu den Enden hin monoton ab.

In Figur 5 schließen sich in axialer Richtung des Außenringes 6 an einem Bereich 11 des Kreisbogens mit dem größeren Krümmungsradius K₁ zwei Bereiche 12 von Kreisbögen mit kleineren Krümmungsradien K₂ an. Bei dem in Figur 6 dargestellten Außenring 9 folgen auf die entsprechenden Bereiche 11 und 12 in axialer Richtung zusätzlich noch jeweils Bereiche 13 von Kreisbogen mit den kleinsten Krümmungsradien K₃.

Versuche haben ergeben, daß bei den Außenringen mit erfindungsgemäß aus mehreren Kreisbögen zusammengesetzten balligen Konturen die im Zusammenwirken mit der Gegenlaufbahn 8 auftretende Hertzsche Pressung deutlich verringert und ihr Grenzwert auch beim Verkippen der Außenringachse nicht überschritten wird.

### Bezugszahlenliste

- 1: Bolzen
- 2: Befestigungsgewinde
- 3: Innenlaufbahn
- 4: Rolle
- 5: Außenlaufbahn
- 6: Außenring
- 7: ballige Kontur
- 8: Gegenlaufbahn
- 9: Außenring
- 10: ballige Kontur
- 11: Bereich des Kreisbogens mit dem größeren Krümmungsradius
- 12: Bereich des Kreisbogens mit dem kleineren Krümmungsradius
- 13: Bereich des Kreisbogens mit dem kleinsten Krümmungsradius
- K₁: Krümmungsradius
- K₂: Krümmungsradius
- K₃: Krummungsradius
- B: Breite des Außenringes

## Patentansprüche

1. Walzlager mit als Rollen (4) oder Kugeln ausgebildeten, zwischen einer Innenlaufbahn (3) und einer Außenlaufbahn (5) angeordneten Wälzkörpern und mit einem dickwandigen Außenring (6, 9), dessen innere Oberfläche die Außenlaufbahn (5) bildet und dessen äußere Oberfläche für das direkte Abrollen auf einer zylindrischen oder ebenen Gegenlaufbahn (8) vorgesehen ist und eine ballige, im Längsschnitt bogenförmige, Kontur (7, 10) aufweist, **dadurch gekennzeichnet, daß** die ballige Kontur (7, 10) des Außenringes (6, 9) aus mehreren Kreisbögen so zusammengesetzt ist, daß diese ohne Kante ineinander übergehen, wobei der längere Krümmungsradius (K₁) eines mittleren Kreisbogens und der kürzere Krümmungsradius (K₂, K₃) eines äußeren Kreisbogens zueinander in einem Verhältnis von 2 zu 1 bis 5 zu 1 stehen.

2. Wälzlager nach Anspruch 1, **dadurch gekennzeichnet, daß** die ballige Kontur (7) des Außenringes (6) aus drei Kreisbögen zusammengesetzt ist, wobei der längere Krümmungsradius (K₁) eines mittleren Kreisbogens und der Krümmungsradius (K₂) eines äußeren Kreisbogens, der dem mittleren Kreisbogen jeweils benachbart ist, zueinander in einem Verhältnis von 2 zu 1 bis 5 zu 1 stehen.

3. Walzlager nach Anspruch 1, **dadurch gekennzeichnet, daß** die ballige Kontur (10) des Außenringes (9) aus fünf Kreisbögen zusammengesetzt ist, wobei die Beträge der Krümmungsradien (K₁, K₂, K₃) der Kreisbögen jeweils von der Mitte des Außenringes (9) aus axial nach außen abnehmen.

4. Wälzlager nach Anspruch 1, **dadurch gekennzeichnet, daß** die ballige Kontur des Außenringes aus einer Vielzahl von Kreisbögen zusammengesetzt ist, wobei die Beträge der Krümmungsradien der Kreisbögen von einem größten Wert in der Mitte des Außenringes (9) axial zu den Enden hin monoton abnehmen

5. Wälzlager nach Anspruch 1, **dadurch gekennzeichnet, daß** die Lange des Krümmungsradius (K₁) eines mittleren Kreisbogens und die Breite (B) des Außenringes (6, 9) zueinander in einem Verhältnis von 3 zu 1 bis 6 zu 1 stehen.

6. Wälzlager nach Anspruch 1, **dadurch gekennzeichnet, daß** es als Kurvenrolle ausgebildet ist, wobei die Innenlaufbahn (3) die äußere Oberfläche eines Bolzens (1) an dessen einem axialen Ende ist und dessen anderes axiales Ende ein Befestigungsgewinde (2) aufweist.

## Claims

1. Rolling-contact bearing having rolling elements, designed as rollers (4) or balls and arranged between an inner track (3) and an outer track (5), and having a thick-walled outer ring (6, 9), the inner surface of which forms the outer track (5) and the outer surface of which is provided for directly rolling on a cylindrical or flat opposing track (8) and has a crowned contour (7, 10) curved in longitudinal section, **characterized in that** the crowned contour (7, 10) of the outer ring (6, 9) is composed of a plurality of circular arcs in such a way that the latter merge into one another without an edge, the longer radius of curvature (K₁) of a central circular arc and the shorter radius of curvature (K₂, K₃) of an outer circular arc being in a ratio of between 2 to 1 and 5 to 1 relative to one another.

2. Rolling-contact bearing according to Claim 1, **characterized in that** the crowned contour (7) of the outer ring (6) is composed of three circular arcs, the longer radius of curvature (K₁) of a central circular arc and the radius of curvature (K₂) of an outer circular arc, which is in each case adjacent to the central circular arc, being in a ratio of between 2 to 1 and 5 to 1 relative to one another.

3. Rolling-contact bearing according to Claim 1, **characterized in that** the crowned contour (10) of the outer ring (9) is composed of five circular arcs, the magnitudes of the radii of curvature (K₁, K₂, K₃) of the circular arcs in each case decreasing axially outwards from the centre of the outer ring (9).

4. Rolling-contact bearing according to Claim 1, **characterized in that** the crowned contour of the outer ring is composed of a multiplicity of circular arcs, the magnitudes of the radii of curvature of the circular arcs monotonically decreasing axially towards the ends from a maximum value in the centre of the outer ring (9).

5. Rolling-contact bearing according to Claim 1, **characterized in that** the length of the radius of curvature (K₁) of a central circular arc and the width (B) of the outer ring (6, 9) are in a ratio of between 3 to 1 and 6 to 1 relative to one another.

6. Rolling-contact bearing according to Claim 1, **characterized in that** it is designed as a cam roller, the inner track (3) being the outer surface of a bolt (1) at its one axial end, and its other axial end having a fastening thread (2).

## Revendications

1. Palier à roulement comprenant des corps de roulement réalisés sous forme de rouleaux (4) ou de billes, disposés entre un chemin de roulement interne (3) et un chemin de roulement externe (5), et comprenant une bague externe (6, 9) à parois épaisses, dont la surface interne forme le chemin de roulement externe (5) et dont la surface externe est prévue pour le roulement direct sur une piste de roulement conjuguée cylindrique ou plane (8) et présente un contour bombé (7, 10), de forme courbe en coupe longitudinale, **caractérisé en ce que** le contour bombé (7, 10) de la bague externe (6, 9) se compose de plusieurs arcs de cercle de telle sorte que ceux-ci se prolongent les uns dans les autres sans arête, le rayon de courbure le plus long (K₁) d'un arc de cercle central et le rayon de courbure plus court (K₂, K₃) d'un arc de cercle extérieur se situant l'un par rapport à l'autre dans un rapport de 2 à 1 à 5 à 1.

2. Palier à roulement selon la revendication 1, **caractérisé en ce que** le contour bombé (7) de la bague externe (6) se compose de trois arcs de cercle, le rayon de courbure le plus long (K₁) d'un arc de cercle central et le rayon de courbure (K₂) d'un arc de cercle extérieur, qui est à chaque fois voisin de l'arc de cercle central, se situant l'un par rapport à l'autre dans un rapport de 2 à 1 à 5 à 1.

3. Palier à roulement selon la revendication 1, **caractérisé en ce que** le contour bombé (10) de la bague externe (9) se compose de cinq arcs de cercle, les valeurs des rayons de courbure (K₁, K₂, K₃) des arcs de cercle diminuant à chaque fois depuis le centre de la bague externe (9) axialement vers l'extérieur.

4. Palier à roulement selon la revendication 1, **caractérisé en ce que** le contour bombé de la bague externe se compose d'une pluralité d'arcs de cercle, les valeurs des rayons de courbure des arcs de cercle diminuant de manière monotone d'une valeur maximale au milieu de la bague externe (9) axialement vers les extrémités.

5. Palier à roulement selon la revendication 1, **caractérisé en ce que** la longueur du rayon de courbure (K₁) d'un arc de cercle central et la largeur (B) de la bague externe (6, 9) se situent dans un rapport de 3 à 1 à 6 à 1.

6. Palier à roulement selon la revendication 1, **caractérisé en ce qu'**il est réalisé en tant que suiveur de came, la piste de roulement interne (3) étant la surface extérieure d'un boulon (1) à l'une de ses extrémités axiales et son autre extrémité axiale présentant un filetage de fixation (2).
